Europäisches Patentamt

European Patent Office

Office européen des brevets

(11) Veröffentlichungsnummer: **0 082 533**
**A2**

(12) # EUROPÄISCHE PATENTANMELDUNG

(21) Anmeldenummer: **82111865.0**

(51) Int. Cl.³: **G 06 F 11/18**

(22) Anmeldetag: **21.12.82**

(30) Priorität: **21.12.81 US 332543**

(43) Veröffentlichungstag der Anmeldung:
**29.06.83 Patentblatt 83/26**

(84) Benannte Vertragsstaaten:
**AT DE FR**

(71) Anmelder: **SIEMENS AKTIENGESELLSCHAFT**
**Berlin und München Wittelsbacherplatz 2**
**D-8000 München 2(DE)**

(72) Erfinder: **Fasang, Patrick**
**746 Frement Lane**
**Mount Laurel New York 08054(US)**

(54) **Verfahren zur Erfassung und Korrektur von Datenfehlern und Vorrichtung zur Durchführung des Verfahrens.**

(57) Ein Verfahren und eine Vorrichtung zur Durchführung des Verfahrens zur Erfassung und Korrektur von Datenfehlern, die in einer Datenspeichereinrichtung auftreten. Eine Vielzahl von Erfassungsschaltung (30 ... 37) wird dazu benutzt, die betreffenden Daten-Bitpositionen von Daten, die auf ähnliche Weise in korrespondierenden Speicherplätzen von drei identischen Speichereinheiten (24, 26, 28) mit wahlfreiem Zugriff RAM gespeichert werden, auszulesen und zu vergleichen. Die Erfassungsschaltungen (30 ... 37) enthalten Logikschaltkreise, die so angeordnet sind, daß sie das Vorhandensein einer Disparität signalisieren und Verarbeitungsdaten entwickeln, die mit den Daten korrespondieren, die aus zumindest zwei Speicherplätzen ausgelesen worden sind.

EP 0 082 533 A2

./...

FIG 1

SIEMENS AKTIENGESELLSCHAFT
Berlin und München

Unser Zeichen
VPA 81 P8258

Verfahren zur Erfassung und Korrektur von Datenfehlern und Vorrichtung zur Durchführung des Verfahrens

Die vorliegende Erfindung bezieht sich auf ein Verfahren zur Erfassung und Korrektur von Datenfehlern, die in Datenspeicher-Einrichtungen auftreten, und eine Vorrichtung zur Durchführung des Verfahrens.

Ein Phänomen, das beobachtet worden ist, tritt insbesondere in integrierten Schaltkreisen für Speicher auf, und besteht darin, daß ein einzelnes Bit in einem Speicherwort aufgrund einer bestimmten Art von Einstrahlung, die auf eine Speicherzelle einwirkt und aus einer Anzahl von Quellen, einschließlich Papier, Blei und anderen, allgemein vorhandenen Materialien auftrifft, verändert wird. Diese Art von Einstrahlung ist als Einstrahlung von $\alpha$-Partikeln bekannt. Die Natur und die Eigenschaften der $\alpha$-Partikeln sind weitgehend unbekannt und derzeit nicht erklärbar.

Datenfehler, manchmal auch als "Software-Fehler" oder "Upsets" bezeichnet, sind offensichtlich zufällig auftretende, nicht wiederkehrende Veränderungen in den logischen Zuständen eines Speichers. Beispielsweise kann der Zustand einer logischen "1" in den Zustand einer logischen "0" verändert werden. Obwohl in erster Linie in bezug auf Speicher betrachtet, kann der Ausdruck "Datenfehler" ebenfalls auf logische Fehler in beliebigen Logik-Schaltkreisen, beispielsweise in Mikroprozessoren, angewendet werden.

Pap 1 Sti - 09.12.1982

Das Phänomen "Datenfehler" ist durch May et al in "Soft Error Testing", 1980 IEEE Test Conference, Paper 6.4, Seiten 137 bis 149 beschrieben worden.

Es wurde herausgefunden, daß dann, wenn ein "Soft Error", nämlich ein Datenfehler, erfaßt worden ist und das veränderte Bit in dem Speicher korrigiert worden ist, dieser korrigierte Fehler niemals mehr auftritt. Es ist indessen aufgrund der unbekannten Natur der $\alpha$-Partikel keinesfalls möglich, das Auftreten von Datenfehler dieser Art zu verhindern.

Der vorliegenden Erfindung liegt die Aufgabe zugrunde, ein Verfahren zum Erfassen und Korrigieren von Datenfehlern, die in Datenspeichereinrichtungen auftreten, und eine Vorrichtung zur Durchführung dieses Verfahrens zu schaffen. Der Ausdruck "Datenspeichereinrichtungen" wird im folgenden so benutzt, daß er alle Arten von Speichern und Logikschaltkreisen, beispielsweise Mikroprozessoren und andere Halbleiteranordnungen einschließt, die auf $\alpha$-Partikel empfindlich reagieren.

Zur Lösung der Aufgabe für die vorliegende Erfindung ist ein Verfahren zum Erfassen und Korrigieren von Datenfehlern vorgesehen, das einen Schritt zum Speichern identischer Daten in zumindest drei separaten Datenspeicherplätzen enthält. Die gespeicherten Daten werden aus jedem der separaten Speicherplätze abgerufen und miteinander verglichen, um jedwede Disparität festzustellen und außerdem Daten für Verarbeitungsvorgänge zu erzeugen, die mit den Daten korrespondieren, die aus der größeren Anzahl von Speicherplätzen herangezogen werden. Auf diese Weise sind Daten, die für diese Verarbeitungsvorgänge erzeugt werden, frei von den Effekten eines Datenfehlers, der in einem der Datenspeicherplätze auftreten kann.

Eine Weiterbildung des Verfahrens gemäß der Erfindung enthält den Schritt der Änderung von Daten, die in den separaten Datenspeicherplätzen gespeichert sind, um diese mit denjenigen Daten in Übereinstimmung zu bringen, die für die Verarbeitungsvorgänge erzeugt werden. Eine andere Weiterbildung der vorliegenden Erfindung enthält einen zusätzlichen Schritt, um die gespeicherten Daten wiederholt aus jedem der separaten Speicherplätze nach dem Änderungsschritt abzurufen und die abgerufenen Daten gemäß dem zweiten Abrufungsschritt miteinander zu vergleichen, um jedwede Disparität festzustellen, so daß das Vorhandensein eines Hardware-Fehlers erkannt werden kann.

Erfindungsgemäß ist außerdem eine Vorrichtung zur Durchführung des Verfahrens vorgesehen. Diese Vorrichtung enthält eine Steuerschaltung zur Erzeugung identischer Daten, die in den separaten Datenspeicherplätzen zu speichern sind, und eine Erfassungsschaltung zum Abrufen der gespeicherten Daten und zum Vergleichen dieser Daten miteinander, um jedwede Disparität unter den Daten, die aus den separaten Speicherplätzen abgerufen werden, zu bestimmen. Die Erfassungsschaltung fungiert außerdem dahingehend, daß sie Daten für Verarbeitungsvorgänge erzeugt, die mit denjenigen Daten korrespondieren, die aus der größeren Anzahl von Speicherplätzen abgerufen werden.

Ein bevorzugtes, die Erfindung verdeutlichendes Ausführungsbeispiel wird im folgenden im einzelnen beschrieben. In diesem Ausführungsbeispiel wird eine Vielzahl von Erfassungsschaltungen verwendet, mit deren Hilfe die betreffenden Datenbit-Positionen der dreifach in separaten Speicherplätzen eines Speichers mit wahlfreiem Zugriff gespeicherten Daten auszulesen und miteinander zu vergleichen sind. Die Ausgangssignale der Erfassungsschaltungen werden benutzt, um das Vorhandensein einer Disparität zu signalisieren und um Daten für Verarbeitungsvorgänge zu erzeugen, die mit denjenigen Daten korrespondieren, die aus zumindest zwei Speicherplätzen abgerufen werden.

Die wichtigsten Aufgaben, Merkmale und Vorteile der Erfindung wurden vorstehend allgemein erläutert, um dem Leser die ins einzelne gehende Beschreibung der Erfindung, die im folgenden gegeben wird, besser verständlich zu machen und damit der vorliegende Beitrag zum Stand der Technik besser ersichtlich wird. Es sind jedoch selbstverständlich zusätzliche Merkmale der Erfindung vorhanden, die im folgenden mehr ins einzelne gehend beschrieben werden. Für den Fachmann ist ersichtlich, daß die Konzeption, auf der die Offenbarung beruht, auf einfache Weise als Grundlage für den Entwurf anderer Anordnungen zur Durchführung der Aufgaben für die vorliegende Erfindung benutzt werden können. Es ist daher wichtig, daß die Offenbarung so zu betrachten ist, daß sie gleichwertige Anordnungen einschließt, die sich nicht von dem allgemeinen Erfindungsgedanken und dem Schutzumfang für die vorliegende Erfindung entfernen.

Zum Zwecke der Verdeutlichung und Beschreibung eines Ausführungsbeispiels sind die im folgenden angegebenen Figuren vorgesehen.

Fig. 1 zeigt ein Blockschaltbild einer Schaltungsanordnung für die vorliegende Erfindung.

Fig. 2 zeigt ein Schaltbild eines Teils der Schaltungsanordnung gemäß Fig. 1.

Fig. 3 zeigt ein Flußdiagramm, aus dem die Arbeitsweise
der Schaltungsanordnung gemäß Fig. 1 hervorgeht.

In den Figuren sind gleiche Elemente mit gleichen Bezugsziffern versehen.

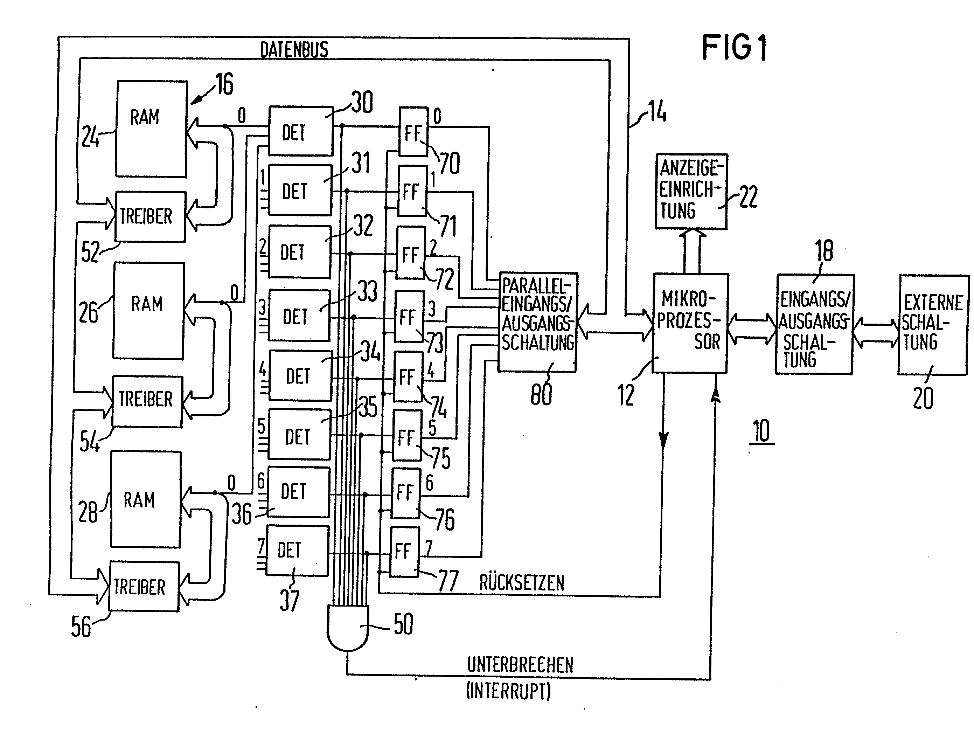

Fig. 1 bis 3 zeigen ein Ausführungsbeispiel für die vorliegende Erfindung, das in der Umgebung
eines typischen Mikroprozessorsystems 10
untergebracht ist, um Datenfehler zu erfassen und zu korrigieren, die in einer zugeordneten Speichereinrichtung auftreten können. Das Mikroprozessorsystem 10 ist repräsentativ für eine Mikroprozessorschaltungsanordnung, die in Recheneinrichtungen,
automatischen Steuerungen usw. benutzt
wird und wobei Ungenauigkeiten, die durch
Datenfehler, die in Speichereinrichtungen
auftreten können, insbesondere unerwünscht
sind.

Wie in Fig. 1 gezeigt, ist ein Mikroprozessor 12 über
einen bidirektionalen Datenbus 14 mit einer Speichereinrichtung 16 zum Speichern und Abrufen von Daten in bzw.
aus Speicherplätzen verbunden, die durch Adressen bestimmt werden, welche durch den Mikroprozessor 12 spezifiziert werden. Eine Eingangs/Ausgangs-Schaltung 18
dient als Schnittstelleneinheit, um den Mikroprozessor
12 zum Zwecke eines Datenaustausches mit einer externen
Schaltung 20 zu verbinden. Eine Anzeigeeinrichtung 22,
beispielsweise ein Drucker oder eine LED-Anzeige, sorgt für eine Kommunikation zwischen dem Mikroprozessor 12 und der Außenwelt.

Die Gründe für Datenfehler oder "Soft errors" sind weitgehend unbekannt. Sie scheinen rein zufällig und zu unvorhersehbaren Zeiten aufzutreten. In einem System, wie beispielsweise dem Mikroprozessor 10, könnte sich ein Datenfehler selbst, beispielsweise wie im folgenden angegeben, manifestieren: Daten, die zum Zwecke ihrer Speicherung zu einem bestimmten Speicherplatz in der Speichereinrichtung 16 übertragen werden, werden nach ihrer Speicherung durch ein eintreffendes Alpha-Teilchen verändert, auf welche Weise die Daten, die aus derselben Speicheradresse ausgelesen werden, einen unterschiedlichen Wert zu den Daten haben, die in diesen Speicherplatz eingeschrieben wurden. Wenn der Datenfehler nicht erfaßt und korrigiert wird, werden falsche Daten durch den Mikroprozessor 12 verarbeitet. Prüfungen der Funktion der Hardware des Mikroprozessors 10 (wie in US-Patentanmeldung Serial No. 314 044 mit dem Titel "Built-In Apparatus and Method for Testing a Microprocessor System", welche Anmeldung von der Anmeldung der vorliegenden Erfindung ausgeht) sind nicht befriedigend, um zufällig auftretende Datenfehler zu erfassen, da solche Fehler nicht auf irgendwelche Hardware-Fehlfunktionen zurückzuführen sind (d.h. sie sind keine "Hardware-Fehler").

Erfindungsgemäß werden Daten, die in der Datenspeichereinrichtung 16 zu speichern sind, über den Datenbus 14 zur gleichzeitigen Speicherung in zumindest drei separaten Datenspeicherplätzen geführt. Da Datenfehler der genannten Art willkürlich auftreten, besteht ein minimales Risiko dahingehend, daß derselbe Datenfehler in den gespeicherten Daten in allen drei Speicherplätzen auftritt. Auf diese Weise wird jede Disparität zwischen den Daten, die von den separaten Speicherplätzen abgerufen werden, dann, wenn für eine Abrufoperation die gespeicherten Daten gleichzeitig aus jedem dieser separaten Speicherplätze ausgelesen werden, das mögliche Bestehen eines Datenfehlers anzeigen. Überdies können die korrekten Daten wegen der willkürlichen Natur der Datenfehler der genannten Art durch ein Abwägungsschema bestimmt werden, und sie können dann als diejenigen Daten, die von der größeren Anzahl von Speicherplätzen abgerufen werden, akzeptiert werden. Bei Speicherung von Daten in einer Dreiereinheit (d.h. in drei Speicherplätzen) wird, wenn die Daten, die aus den drei Speicherplätzen abgerufen wurden, nicht übereinstimmen, ein Datenfehler angezeigt. Die koinzidierenden Daten, die aus zwei der Speicherplätzen abgerufen worden sind, werden zur Verarbeitung verwendet, und das Datum, das aus dem dritten Speicherplatz abgerufen wird, wird als fehlerhaft angenommen. Falls die Daten, die in separaten Speicherplätzen gespeichert sind, nun verändert werden, um sie mit dem Datum, das für die Verarbeitung benutzt wird, konform zu machen, falls der Fehler ein Datenfehler der genannten Art ist, wird dieses Datum korrigiert. Eine Wiederholung des Abrufvorganges und des Vergleichsvorganges dann, wenn ein Fehler erkannt worden ist, sollte dann eine vollständige Koinzidenz zwischen den Daten, die nach dem Schritt zum Gleichmachen nach dem Abrufen aus den drei separaten Speicherplätzen auftreten, ergeben. Falls eine Koinzidenz nicht zu diesem Zeitpunkt besteht, wird ein "Hardware-Fehler" angezeigt.

Für das Mikroprozessorsystem 10, das in Figur 1 gezeigt ist, ist die Datenspeichereinrichtung 16 so vorgesehen, daß sie drei identische Speichereinheiten mit wahlfreiem Zugriff RAM 24, 26 und 28 hat. Die Verwendung von identischen Speichereinheiten mit wahlfreiem Zugriff RAM 24, 26 und 28 wird bevorzugt, da sie die Benutzung einer einzigen Adresse ermöglicht, um drei korrespondierende separate Datenspeicherplätze gleichzeitig durch Verwendung bekannter Verbindungstechniken anzusteuern. Es sei jedoch bemerkt, daß die korrespondierenden Speicherplätze in einer einzigen Speichereinheit mit wahlfreiem Zugriff RAM vorgesehen sind oder daß Verbindungen für die gleichzeitige Ansteuerung von separaten Speicherplätzen mittels unterschiedlicher Adressen vorgesehen sein können.

Die Wahl der Anzahl 3 als Anzahl der gleichzeitig benutzten Speicherplätze ist eine Frage der Vorteilhaftigkeit. Die Verwendung von nur zwei Speicherplätzen ist nicht ausreichend, da - obwohl die Existenz eines Datenfehlers der genannten Art in einem der Speicherplätze erfaßt werden kann - eine Identifizierung des Speicherplatzes, der den Fehler aufweist, nicht aus einer Überprüfung der abgerufenen Daten durchgeführt werden kann. Die Verwendung einer größeren Anzahl von Speicherplätzen hat den Vorteil der Verringerung des Risikos, daß der gleiche Datenfehler der genannten Art an mehr als einer Speicherstelle auftritt. Ein Nachteil dieser Anordnung besteht jedoch darin, daß zusätzliche Speicherkapazität erforderlich ist.

Die Verbindungen zwischen dem Mikroprozessor 12 und den Speichereinheiten mit wahlfreiem Zugriff RAM 24, 26 und 28 werden in Übereinstimmung mit bekannten Techniken hergestellt, so daß die korrespondierenden Datenspeicherplätze in jeder der Speichereinheiten mit wahlfreiem Zugriff RAM 24, 26, 28 gleichzeitig für jede Lese- oder Schreiboperation des Mikroprozessors 12, der eine einzige Speicheradresse für die Datenspeichereinrichtung 16 bestimmt, angesteuert werden. Der Mikroprozessor kann beispielsweise ein 8-Bit-Mikroprozessor, beispielsweise ein Intel 8085, sein, bei dem $\overline{\text{RD}}$- (Lese-), $\overline{\text{WR}}$- (Schreib-) und IO/$\overline{\text{M}}$- (Eingabe/Ausgabe- oder Speicherzugriffs-)Steuerleitungen Bestandteil eines Adressbus sind, um die individuellen Speichereinheiten mit wahlfreiem Zugriff RAM ansteuern zu können. Die Speichereinheiten mit wahlfreiem Zugriff RAM 24, 26 und 28 können beliebige auf dem Markt erhältliche 8-Bit-RAM-Einheiten, beispielsweise zwei statische Intel-2114A-1024 x 4-Bit- RAM-Einheiten, die zusammengeschaltet sind, oder dergl. sein. In einer derartigen Schaltungskonfiguration speichert jeder Speicherplatz Daten in Bitform in sog. Wörtern, die jeweils 8 Bit-Positionen durch entsprechende Verbindungen der 8 Daten-Eingangs/Ausgangs-Stifte jeder der RAM-Einheiten mit 8 Datenleitungen des bidirektionalen Datenbus 14 haben. Ein Befehl, der durch den Mikroprozessor 12 ausgeführt wird, um Daten in eine spezifizierte Adresse der Datenspeichereinrichtung 16 einzuschreiben, speichert gleichzeitig das identische 8-Bit-Datenwort in korrespondierenden Speicherplätzen der Speichereinheiten mit wahlfreiem Zugriff RAM 24, 26 und 28.

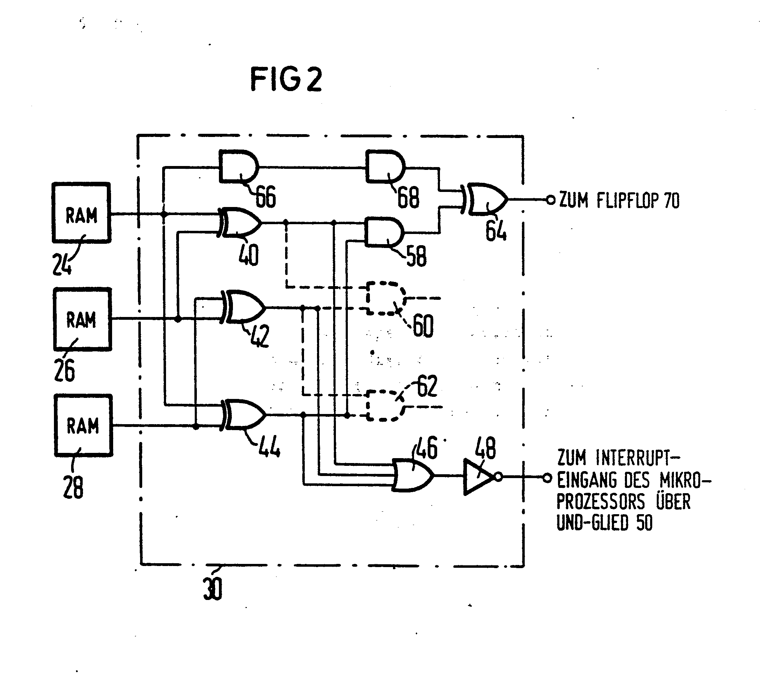

Mit den Daten-Eingangs/Ausgangs-Stiften der Speichereinheiten mit wahlfreiem Zugriff RAM 24, 26 und 28 ist außerdem eine Erfassungsschaltungsanordnung (Fig. 1) verbunden, die aus 8 Erfassungsschaltungen 30 ... 37 besteht, wobei jede derart in der Schaltungsanordnung angeordnet ist, daß sie eine unterschiedliche der gespeicherten Datenbitpositionen aus jedem der korrespondierenden separaten Speicherplätze der Speichereinheiten mit wahlfreiem Zugriff 24, 26 bzw. 28 abrufen kann. Auf diese Weise ist die erste Erfassungsschaltung 30 so beschaltet, daß sie die niedrigste (oder "0"-) Bitposition der Daten, die aus den korrespondierenden Speicherplätzen der drei Speichereinheiten mit wahlfreiem Zugriff RAM abgerufen wird, empfangen kann. Die zweite Erfassungsschaltung 31 ist derart angeordnet, daß sie die zweitniedrigste (oder "1"-) Bitposition abrufen kann usw.. Die Erfassungsschaltungen 30 ... 37 sind identisch und haben den gleichen Aufbau wie die erste Erfassungsschaltung 30, die in Figur 2 gezeigt ist.

Die Erfassungsschaltung 30 enthält drei Exklusiv-ODER-Glieder 40, 42 und 44, die jeweils zwei Eingänge haben, die entsprechend beschaltet sind, um das niedrigste Datenbit der Daten, die aus jeder von zwei aus den drei Speichereinheiten mit wahlfreiem Zugriff RAM 24, 26 und 28 abgerufen werden, zu empfangen. Wie in Figur 2 gezeigt , ist das erste Exklusiv-ODER-Glied 40 so angeschaltet, daß es die niedrigsten Datenbits aus den Speichereinheiten mit wahlfreiem Zugriff RAM 24 und 26 miteinander vergleicht. Das zweite Exklusiv-ODER-Glied 42 ist so angeschaltet, daß es die niedrigsten Bits der Speichereinheiten mit wahlfreiem Zugriff RAM 26 und 28 miteinander vergleicht. Schließlich ist das dritte Exklusiv-ODER-Glied 44 derart angeschaltet, daß es die niedrigsten Bits aus den Speichereinheiten mit wahlfreiem Zugriff RAM 24 und 28 miteinander vergleicht. Die Ausgänge der Exklusiv-ODER-Glieder 40, 42 und 44 sind alle als Eingänge eines ODER-Gliedes 46 geschaltet. Die genannten Logikschaltkreise, nämlich die Exklusiv-ODER-Glieder 40, 42 und 44 sowie das ODER-Glied 46, sind so angeordnet, daß jede beliebige Diskrepanz zwischen den niedrigsten Bits der Daten, die aus jeder der Speichereinheiten mit wahlfreiem Zugriff RAM 24, 26 und 28 abgerufen werden, durch einen Wechsel des Status des Ausgangssignals aus dem ODER-Glied 46 angezeigt wird. Wenn beispielsweise die niedrigsten Bits aus den Speichereinheiten mit wahlfreiem Zugriff RAM 24 und 26 einen Binärwert "1" haben und das niedrigste Bit aus der Speichereinheit mit wahlfreiem Zugriff RAM 28 einen binären Wert "O" hat, erscheint ein Binärwert "1" an dem Ausgang des ODER-Gliedes 46. Der Ausgang des ODER-Gliedes 46 ist über einen Inverter 48 als Ausgang mit einem NAND-Glied 50 (Figur 1 und 2) verbunden.

Wie in der im folgenden angegebenen Tabelle 1 gezeigt ist, nehmen zwei der Ausgänge der Exklusiv-ODER-Glieder 40, 42 und 44 der Erfassungsschaltung 30 den logischen Zustand "1" für Datenfehler ein, die in der niedrigsten Bitposition der Speicherplätze der Speichereinheiten mit wahlfreiem Zugriff RAM 24, 26 und 28 auftreten. Ein UND-Glied 58 (Figur 2), das beispielsweise so angeordnet ist, daß es die Ausgangssignale der Exklusiv-Oder-Glieder 40 und 44 empfängt, nimmt den Ausgangssignalzustand logisch "1" an, wenn der Fehlerort in der Speichereinheit mit wahlfreiem Zugriff RAM 24 liegt. Ein weiteres UND-Glied 60 (gestrichelt in Figur 2 gezeigt) ist so angeordnet, daß es die Ausgangssignale der Exklusiv-ODER-Glieder 40 und 42 empfängt, und es nimmt den logischen Zustand "1" an, wenn der Fehler in der Speichereinheit mit wahlfreiem Zugriff RAM 26 liegt. Auf ähnliche Weise ist ein weiteres UND-Glied 62 (ebenfalls gestrichelt in Figur 2 dargestellt) so angeordnet, daß es die Ausgangssignale der Exklusiv-ODER-Glieder 42 und 44 empfängt, und es nimmt den logischen Ausgangssignalzustand "1" an, wenn der Fehler in der Speichereinheit mit wahlfreiem Zugriff RAM 28 liegt.

| Ort des Datenfehlers | Logische Zustände der Exklusiv-ODER-Glieder | | | Logische Zustände der UND-Glieder | | |
|---|---|---|---|---|---|---|
| | 40 | 42 | 44 | 58 | 60 | 62 |
| RAM 24 | 1 | 0 | 1 | 1 | 0 | 0 |
| RAM 26 | 1 | 1 | 0 | 0 | 1 | 0 |
| RAM 28 | 0 | 1 | 1 | 0 | 0 | 1 |

Tabelle 1

Logische Zustände für einen Datenfehler in der niedrigsten Bitposition

Das Ausgangssignal jedes der UND-Glieder 58, 60 oder 62 kann auf diese Weise dazu verwendet werden, Verarbeitungsdaten zu erzeugen, die mit denjenigen Daten korrespondieren, die aus der größeren Anzahl von Speicherplätzen aufgerufen worden sind. Wie in Figur 2 gezeigt, ist der Ausgang des UND-Gliedes 58 als ein Eingang mit einem weiteren Exklusiv-ODER-Glied 64 verbunden. Der Daten-Eingangs/Ausgangs-Stift der Speichereinheit mit wahlfreiem Zugriff RAM 24, der mit der niedrigsten Datenbitposition korrespondiert, ist ebenfalls als ein Eingang mit dem Exklusiv-ODER-Glied 64 mittelbar über Pufferschaltungen 66 und 68 verbunden. Wie in der im folgenden angegebenen Tabelle 2 gezeigt ist, ist das Ausgangsignal des Exklusiv-ODER-Gliedes 64 identisch mit dem Signalzustand der niedrigsten Bitposition der Speichereinheit mit wahlfreiem Zugriff RAM 24, und zwar immer dann, wenn die Erfassungsschaltung 30 anzeigt, daß die Speichereinheit mit wahlfreiem Zugriff RAM 24 den korrekten Dateninhalt abgibt.

Wenn indessen das Ausgangssignal des UND-Gliedes 58 den logischen Zustand "1" aufweist, der anzeigt, daß das niedrigste Datenbit der Speichereinheit mit wahlfreiem Zugriff RAM 24 fehlerhaft ist, wird das Datenbit, das aus der Speichereinheit mit wahlfreiem Zugriff RAM 24 für die niedrigste Datenbitposition abgerufen worden ist, am Ausgang des Exklusiv-ODER-Gliedes 64 komplementiert. Das Ausgangssignal des Exklusiv-ODER-Gliedes 64 dient auf diese Weise zur Erzeugung von Verarbeitungsdaten, die mit koinzidierenden niedrigsten Bitpositionen korrespondieren, die aus zumindest zwei der drei separaten Speicherplätze, welche die gleiche Adresse haben, abgerufen worden sind.

| Abgerufene Daten RAM 24 26 28 | | | Logischer Zustand des UND-Gliedes 58 | Logischer Zustand des Exklusiv-ODER-Gliedes 64 |
|---|---|---|---|---|
| 0 | 0 | 0 | 0 | 0 |
| 0 | 0 | 1 | 0 | 0 |
| 0 | 1 | 0 | 0 | 0 |
| 0 | 1 | 1 | 1 | 1 |
| 1 | 0 | 0 | 1 | 0 |
| 1 | 0 | 1 | 0 | 1 |
| 1 | 1 | 0 | 0 | 1 |
| 1 | 1 | 1 | 0 | 1 |

Tabelle 2
Logische Zustände zur Herstellung der Koinzidenz der
Daten in der niedrigsten Bitposition

Der Ausgang des Exklusiv-ODER-Gliedes 64 ist mit einem
Flipflop 70 verbunden, das den logischen Zustand
speichert, welcher als die "korrekte" niedrigste Bitposition der abgerufenen Daten identifiziert worden ist.

Der Erfassungsschaltungen 31 ... 37 sind in ihrer
Struktur identisch mit der Erfassungsschaltung 30 und
sind jeweils auf ähnliche Weise angeordnet, um jeweils
eine unterschiedliche Bitposition der Daten, die aus
jedem der drei korrespondierenden Speicherplätze der
Speichereinheiten mit wahlfreiem Zugriff RAM 24, 26 bzw.
28 abgerufen werden, zu vergleichen. Aus Gründen der
Klarheit der Darstellung sind die Verbindungen zwischen
den Speichereinheiten mit wahlfreiem Zugriff RAM 24, 26
und 28 und die Erfassungsschaltungseinrichtung nur betreffend die untersten oder "0"-Bitpositions-Verbindungen
in der Erfassungsschaltung 30 gezeigt.

Die Ausgänge der ODER-Glieder 46 der Erfassungsschaltungen 31 ... 37 sind jeweils über Inverter 48 als Eingänge mit dem NAND-Glied 50 verbunden. Das NAND-Glied 50
ändert seinen Zustand von "0" in "1" immer dann, wenn

0082533
81 P 8 2 5 8

irgendeine der Erfassungsschaltungen 30... 37 eine Nichtübereinstimmung in einer Bitposition der Daten erfaßt, die aus den separaten RAM-Speicherplätzen abgerufen worden sind. Der Ausgang des NAND-Gliedes 50 ist so beschaltet, daß er ein Interrupt-Signal an den Mikroprozessor immer dann liefert, wenn eine derartige Nichtübereinstimmung auftritt. Wenn keine Nichtübereinstimmung erfaßt worden ist, wird die Datenkommunikation (d.h. Schreib- und Leseoperationen) zwischen dem Mikroprozessor 12 und der Datenspeichereinrichtung 16 über den Datenbus 14 fortgesetzt, und die Erfassungsschaltungsanordnung erscheint für das Mikroprozessorsystem 10 durchlässig, es sei denn, daß ein Interrupt auftritt, der durch das NAND-Glied 50 verursacht wird. Mehrere bidirektionale Treiber 52, 54 und 56 (siehe Figur 1) dienen dazu, die korrespondierenden Daten-Eingangs/Ausgangs-Stifte der Speichereinheiten mit wahlfreiem Zugriff RAM 24, 26 und 28 zu entkoppeln.

Die Ausgänge der Exklusiv-ODER-Gliederm 64 der Erfassungsschaltungen 31 ... 37 sind jeweils mit einem von Flipflops 71 ... 77 (siehe Figur 1) verbunden. Die Flipflops 70 ... 77 können von identischem Aufbau sein und jeweils in Form eines geeigneten herkömmlichen Flipflop, beispielsweise eines 7474 D-Flipflop, ausgebildet sein. Die nichtinvertierenden Ausgangsstifte der Flipflops 70 ... 77 sind jeweils derart angeschaltet, daß sie Signale an die Daten-Eingangs/Ausgangs-Stifte einer Parallel-Eingangs/Ausgangs-Schaltung 80 liefern. Die Flipflops sind außerdem so angeschaltet, daß sie durch den Mikroprozessor 12 rückgesetzt werden können.

0082533

81 P3258

Die software oder das Programm des Mikroprozessors 12 ist
gegenüber bekannten Mikroprozessor-Programmiertechniken
derart erweitert, daß dann, wenn ein Interrupt durch
einen Wechsel in dem Zustand an dem Ausgang des NAND-
Gliedes 50 verursacht wird, das "korrekte Datum" mittels
der Parallel-Eingangs/Ausgangs-Schaltung 80 ausgelesen
wird. Das Datum, das aus der Parallel-Eingangs/Ausgangs-
schaltung 80 ausgelesen worden ist, wird dann dazu benutzt,
die Daten, die in den Speichereinheiten mit wahlfreiem
Zugriff RAM 24, 26 und 28 gespeichert sind, zu ändern, um
sie in Übereinstimmung mit den korrekten Daten zu
bringen.

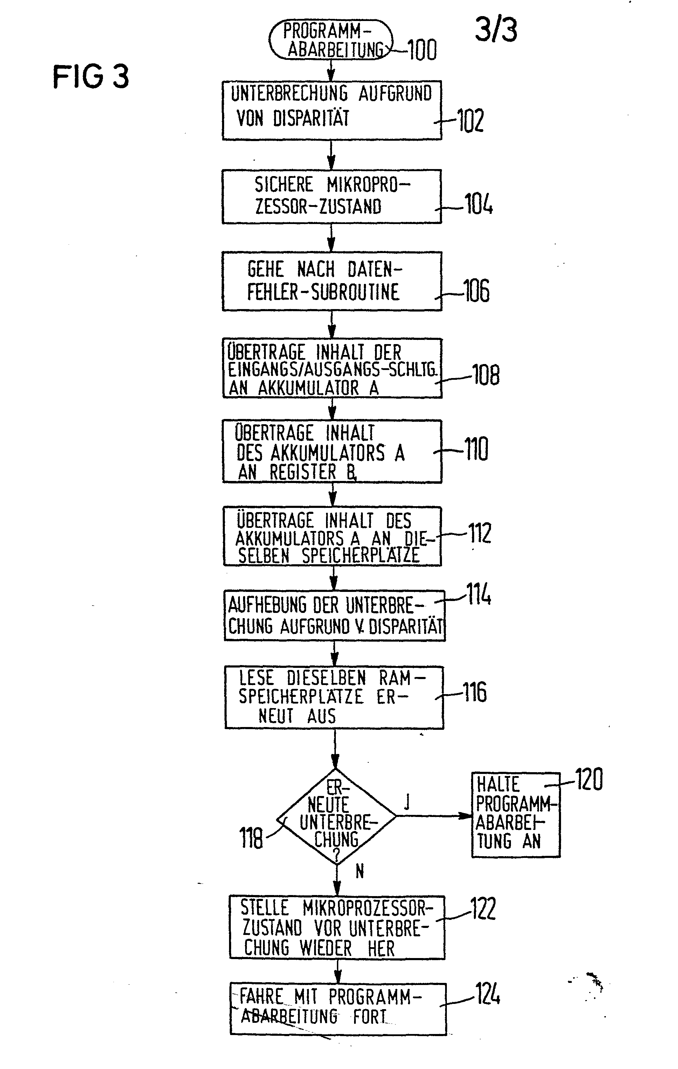

Die Arbeitsweise der Schaltungsanordnung, die zuvor
anhand von Figur 1 und Figur 2 beschrieben worden ist
und dazu bestimmt ist, das Verfahren gemäß der vorliegenden Erfindung zu ermöglichen, kann anhand des Flußdiagramms gemäß Figur 3 ersehen werden. Wie in einem
Block 100 angezeigt ist, tritt eine normale Speicherung
und ein normales Abrufen ohne Behinderung aufgrund der
Erfassungsschaltungsanordnung auf, bis ein Interrupt,
nämlich eine Betriebsunterbrechung, die durch eine
Änderung in dem Ausgangssignalstatus des NAND-Gliedes 50
auftritt, wie dies durch einen Block 102 dargestellt ist.
Wenn eine derartige Unterbrechung oder ein Interrupt
auftritt, wird der gerade bestehende Zustand der
Mikroprozessor-Berechnungsvorgänge festgehalten, und es
wird eine Datenidentifizierung und eine Korrektursubroutine in Gang gesetzt (siehe Blöcke 104, 106). Das
8-Bit-Wort, das in die Flipflops 70 ... 77 eingeschrieben
ist, wobei die Schaltzustände der Flipflops die koinzidenten Daten für die "0" ... "7"-Bitpositionen der Daten
repräsentieren, die aus den Speichereinheiten mit
wahlfreiem Zugriff RAM 24, 26 und 28 abgerufen wurden und welche von der Parallel-Eingangs/Ausgangsschaltung 80 als ein Ergebnis des Vergleichs, der durch die Erfassungsschaltungen 30 ... 37 durchgeführt wurde, empfangen worden sind, wird, wenn das letzte Speicherbyte ausgelesen worden ist, zu einem Akkumulator A (Block 108) übertragen. Die Inhalte des Akkumulators A werden dann zu einem Register B (welches irgendein Register, beispielsweise ein Zwischenspeicher-Register sein kann) übertragen (Block 110). Dieselben Inhalte werden ebenfalls in die Speichereinheiten mit wahlfreiem Zugriff RAM 24, 26 und 28 unter den gleichen Adressen, aus denen das letzte Speicherbyte ausgelesen worden war, eingeschrieben (Block 112).

Die Unterbrechung oder der Interrupt werden dann rückgängig gemacht, und dieselben RAM-Speicherplätze werden erneut ausgelesen (Blöcke 114, 116). Falls der Interrupt erneut auftritt, ist dies ein Zeichen dafür, daß die Operation, die im Block 112 durchgeführt worden ist, die gespeicherten Daten nicht korrigiert hat, was anzeigt, daß ein" harter" Fehler, nämlich ein elektrischer Fehler, vorliegen kann. Der weitere Betrieb wird dadurch angehalten (Blöcke 118, 120). Falls der Interrupt nicht erneut auftritt, wird der Status des Mikroprozessors, der vor dem Interrupt bestanden hat, wiederhergestellt (vorzugsweise durch herkömmliche Prozeduren), und es wird die Programmabwicklung wie zuvor fortgesetzt (Blöcke 122, 124). Die Prozedur, die beschrieben worden ist, stellt einen Mechanismus zur Verfügung, durch welchen sog. weiche Fehler oder Datenfehler, die in den Datenspeichereinrichtungen auftreten können, erfaßt und korrigiert werden können.

Die vorstehende Beschreibung der Schaltungsanordnung und des Verfahrens gemäß der vorliegenden Erfindung anhand eines bevorzugten Ausführungsbeispiels beschränkt die Erfindung nicht auf dieses spezielle Ausführungsbeispiel. Für den Fachmann ist ersichtlich, daß zahlreiche Änderungen und Modifikationen des Anmeldungsgegenstandes durchgeführt werden können, ohne daß dazu der allgemeine Erfindungsgedanke oder der Schutzumfang, der durch die Ansprüche bestimmt ist, verlassen werden müßte.

Patentansprüche

1. Verfahren zur Erfassung und Korrektur von Datenfehlern, die in einer Datenspeichereinrichtung auftreten, d a d u r c h   g e k e n n z e i c h n e t , daß jeweils identische Daten in zumindest drei separaten Datenspeicherplätzen gespeichert werden, daß die gespeicherten Daten von jedem der separaten Speicherplätze abgerufen werden und daß die abgerufenen Daten miteinander verglichen werden, um eine Disparität der Daten zu erkennen, wodurch das Vorhandensein eines Datenfehlers bestimmbar ist.

2. Verfahren zur Erfassung und Korrektur von Datenfehlern, die in einer Datenspeichereinrichtung auftreten, d a d u r c h   g e k e n n z e i c h n e t, daß jeweils identische Daten in zumindest drei separaten Datenspeicherplätzen gespeichert werden, daß die gespeicherten Daten aus jedem der separaten Speicherplätze abgerufen werden und daß die Daten, die aus den separaten Speicherplätzen abgerufen worden sind, miteinander verglichen werden, um eine Disparität zu erkennen und um Verarbeitungsdaten zu erzeugen, die mit denjenigen Daten korrespondieren, welche aus der größeren Anzahl von Speicherplätzen gewonnen worden sind, wodurch die erzeugten Verarbeitungsdaten frei von Datenfehlern sind, die in einem der Speicherplätze aufgetreten sind.

3. Verfahren nach Anspruch 2, d a d u r c h   g e k e n n z e i c h n e t , daß die Daten, die in den separaten Speicherplätzen gespeichert worden sind, geändert werden, um sie mit den Daten, die zur Verarbeitung erzeugt worden sind, in Übereinstimmung zu bringen.

4. Verfahren nach Anspruch 2 oder 3, d a d u r c h   g e k e n n z e i c h n e t , daß der Schritt zum Speichern das Speichern der Daten in Bitform einschließt und daß der Schritt zum Vergleichen das Vergleichen der korrespondierenden Bitpositionen der Daten, die aus den separaten Speicherplätzen abgerufen worden sind, und das Erzeugen von Daten in Bitform zu Verarbeitungszwecken, deren Bitpositionen Werte gleich den entsprechenden Werten der korrespondierenden Bitpositionen der größeren Anzahl von Speicherplätzen haben, einschließt.

5. Verfahren nach Anspruch 3, d a d u r c h   g e - k e n n z e i c h n e t , daß ein erneutes Abrufen der gespeicherten Daten aus jedem der separaten Speicherplätze nach dem Ändern der gespeicherten Daten in den separaten Speicherplätzen vorgesehen ist und daß ein Vergleichen der Daten, welche aus den separaten Speicherplätzen erneut abgerufen worden sind, vorgesehen ist, um irgendeine Disparität zwischen den Daten, die auf diese Weise abgerufen worden sind, zu bestimmen, wodurch ein "harter" Fehler, der in einem der Speicherplätze auftreten kann, erfaßt wird.

6. Vorrichtung zur Durchführung des Verfahrens zur Erfassung und Korrektur von Datenfehlern nach einem der vorhergehenden Ansprüche, d a d u r c h   g e k e n n - z e i c h n e t , daß Mittel zum Speichern (24, 26, 28) identischer Daten in zumindest drei separaten Speicherplätzen vorgesehen sind, daß Mittel, die mit den Mitteln zum Speichern (24, 26, 28) verbunden sind, zum Abrufen der gespeicherten Daten aus jedem der separaten Speicherplätze vorgesehen sind und daß Mittel, die mit den Mitteln zum Abrufen verbunden sind, zum Vergleichen der Daten, die aus den separaten Speicherplätzen abgerufen werden, um eine Disparität zu identifizieren, vorgesehen sind, wodurch das Vorhanden eines Datenfehlers bestimmt wird.

7. Vorrichtung zur Durchführung des Verfahrens zur Erfassung und Korrektur von Datenfehlern in einer Speicher- einrichtung, d a d u r c h   g e k e n n z e i c h n e t ,

daß Mittel zum Speichern (24, 26, 28) identischer Daten
in zumindest drei separaten Speicherplätzen vorgesehen
sind, daß Mittel, die mit den Mitteln zum Speichern verbunden sind, zum Abrufen der gespeicherten Daten aus
jedem der separaten Speicherplätze vorgesehen sind und
daß Mittel, die mit den Mitteln zum Abrufen verbunden
sind, zum Vergleichen der Daten, die aus den separaten
Speicherplätzen zum Erzeugen von Verarbeitungsdaten, die
mit den denjenigen Daten korrespondieren, die aus der
größten Anzahl von Speicherplätzen abgerufen worden sind,
vorgesehen sind, wodurch die erzeugten Verarbeitungsdaten
frei von einem Datenfehler sind, der in einem der Speicherplätze auftreten kann.

8. Vorrichtung nach Anspruch 7, d a d u r c h   g e -
k e n n z e i c h n e t , daß Mittel, die mit den Mitteln
zum Vergleichen verbunden sind, zum Ändern der in den separaten Speicherplätzen gespeicherten Daten vorgesehen
sind, um diese mit den Verarbeitungsdaten in Übereinstimmung zu bringen, wodurch ein Datenfehler, der in
einem der Speicherplätze auftritt, korrigiert wird.

9. Vorrichtung zur Durchführung des Verfahrens zur Erfassung und Korrektur von Datenfehlern, die in einer Datenspeichereinrichtung auftreten, d a d u r c h   g e -
k e n n z e i c h n e t , daß ein Speicher vorgesehen
ist, der eine Vielzahl von drei oder mehr Speicherplatzgruppen aufweist, daß eine Steuerschaltungsanordnung
vorgesehen ist, die mit dem Speicher zum Speichern identischer Daten in jeweils zumindest drei der separaten
Speicherplätze angeordnet ist, und daß eine Erfassungsschaltungseinrichtung (30 ... 37) vorgesehen ist, die mit
dem Speicher zum Abrufen von Daten, die in den separaten
Speicherplätzen gespeichert sind, und zum Vergleichen der
Daten, die auf diese Weise abgerufen worden sind, verbunden ist, um Verarbeitungsdaten zu erzeugen, die mit
denjenigen Daten korrespondieren, die von der größten Anzahl von Speicherplätzen abgerufen wurde, wodurch die
Daten, die zur Verarbeitung erzeugt werden, frei von
einem Datenfehler sind, der in einem der Speicherplätze
auftreten kann.

10. Vorrichtung nach Anspruch 9, d a d u r c h   g e -
k e n n z e i c h n e t , daß die separaten Speicherplätze jeweils eine Vielzahl von Daten-Bitzellen enthalten, daß die Steuerschaltungsanordnung dazu bestimmt ist,
die betreffenden Daten-Bitpositionen von identischen Daten in Bitform in korrespondierenden der separaten Speicherplätze zu speichern, und daß die Erfassungsschaltungsanordnung (30 ... 37) eine Vielzahl von Erfassungsschaltungen enthält, die so angeordnet sind, daß sie eine unterschiedliche von den gespeicherten Daten-Bitpositionen
von unterschiedlichen korrespondierenden Daten-Bitpositionen der Zellen der separaten Speicherplätze abrufen
können, wobei jede der Erfassungsschaltungen dazu dient,
die gespeicherten korrespondierenden Daten-Bitpositionen,
die auf diese Weise abgerufen worden sind, zu vergleichen
und eine korrespondiernde Daten-Bitposition der Daten zum
Verarbeiten zu erzeugen, die einen Wert hat, der gleich
dem Wert der korrespondierenden Daten-Bitpositionen ist,
die aus der größeren Anzahl von derartigen korrespondierenden Speicherplatzzellen abgerufen worden sind.

11. Vorichtung nach Anspruch 10, d a d u r c h   g e -
k e n n z e i c h n e t , daß jede Erfassungsschaltung
(30 ... 37) eine Logikschaltungsanordnung enthält, die
aus einem ersten Exklusiv-ODER-Glied (40), das derart
angeordnet ist, daß es Eingangssignale von einem ersten
und einem zweiten der Speicherplätze empfängt, aus einem
zweiten Exklusiv-ODER-Glied (42), das so angeordnet ist,
daß es Eingangssignale aus dem zweiten und einem dritten
der Speicherplätze empfängt, aus einem dritten Exklusiv-
ODER-Glied (44), das so angeordnet ist, daß es Eingangssignale von dem ersten und dem dritten der Speicherplätze empfängt, besteht, und daß ein Logikschaltkreis vorgesehen ist, der so angeordnet ist, daß er Eingangssignale aus dem ersten, dem zweiten und

dem dritten Exklusiv-ODER-Glied (40, 42, 44) empfängt, wobei der Logikschaltkreis so ausgewählt und angeschaltet wird, daß sein Ausgang den Zustand in Übereinstimmung mit dem vorhandensein oder dem Nichtvorhandensein von Datenfehlern ändert.

12. Vorrichtung nach Anspruch 11, d a d u r c h  g e - k e n n z e i c h n e t , daß jede der Erfassungsschaltungen (30 ... 32) ferner ein UND-Glied (58) enthält, das so angeordnet ist, daß es Eingangssignale von dem ersten und dem dritten Exklusiv-ODER-Glied (40, 44) empfängt, und daß ein viertes Exklusiv-ODER-Glied (64) vorgesehen ist, das so angeordnet ist, daß es Eingangssignale von dem UND-Glied (58) und dem ersten Speicherplatz empfängt, wobei das Ausgangssignal des vierten Exklusiv-ODER-Gliedes (64) dazu dient, eine Daten- Bitposition zu entwickeln, die frei von Datenfehlern ist.

FIG 1

DATENBUS

RAM 16 24
TREIBER 52
RAM 26
TREIBER 54
RAM 28
TREIBER 56

DET 30 0
DET 31 1
DET 32 2
DET 33 3
DET 34 4
DET 35 5
DET 36 6
DET 37 7

FF 0 70
FF 1 71
FF 2 72
FF 3 73
FF 4 74
FF 5 75
FF 6 76
FF 7 77

50

RÜCKSETZEN

PARALLEL-EINGANGS/AUSGANGS-SCHALTUNG 80

14

ANZEIGE-EINRICH-TUNG 22

MIKRO-PROZES-SOR 12

10

EINGANGS/AUSGANGS-SCHAL-TUNG 18

EXTERNE SCHAL-TUNG 20

UNTERBRECHEN (INTERRUPT)

1/3

0082533

FIG 2

ZUM FLIPFLOP 70

ZUM INTERRUPT-EINGANG DES MIKRO-PROZESSORS ÜBER UND-GLIED 50

**FIG 3**

```
        ┌─────────────────┐
        │  PROGRAMM-      │── 100
        │  ABARBEITUNG    │
        └────────┬────────┘
                 ▼
    ┌────────────────────────┐
    │ UNTERBRECHUNG AUFGRUND │── 102
    │ VON DISPARITÄT         │
    └────────────┬───────────┘
                 ▼
    ┌────────────────────────┐
    │ SICHERE MIKROPRO-      │── 104
    │ ZESSOR-ZUSTAND         │
    └────────────┬───────────┘
                 ▼
    ┌────────────────────────┐
    │ GEHE NACH DATEN-       │── 106
    │ FEHLER-SUBROUTINE      │
    └────────────┬───────────┘
                 ▼
    ┌────────────────────────┐
    │ ÜBERTRAGE INHALT DER   │── 108
    │ EINGANGS/AUSGANGS-     │
    │ SCHLTG. AN AKKUMULATOR A│
    └────────────┬───────────┘
                 ▼
    ┌────────────────────────┐
    │ ÜBERTRAGE INHALT       │── 110
    │ DES AKKUMULATORS A     │
    │ AN REGISTER B.         │
    └────────────┬───────────┘
                 ▼
    ┌────────────────────────┐
    │ ÜBERTRAGE INHALT DES   │── 112
    │ AKKUMULATORS A AN DIE- │
    │ SELBEN SPEICHERPLÄTZE  │
    └────────────┬───────────┘
                 ▼
    ┌────────────────────────┐
    │ AUFHEBUNG DER UNTERBRE- │── 114
    │ CHUNG AUFGRUND V. DISPARITÄT│
    └────────────┬───────────┘
                 ▼
    ┌────────────────────────┐
    │ LESE DIESELBEN RAM-    │── 116
    │ SPEICHERPLÄTZE ER-     │
    │ NEUT AUS               │
    └────────────┬───────────┘
                 ▼
          ◇ ER-NEUTE              ┌──────────────┐
    118 ─ ◇ UNTERBRE-  ── J ──▶  │ HALTE        │── 120
          ◇ CHUNG ?              │ PROGRAMM-    │
                 │ N             │ ABARBEITUNG AN│
                 ▼               └──────────────┘
    ┌────────────────────────┐
    │ STELLE MIKROPROZESSOR- │── 122
    │ ZUSTAND VOR UNTERBRE-  │
    │ CHUNG WIEDER HER       │
    └────────────┬───────────┘
                 ▼
    ┌────────────────────────┐
    │ FAHRE MIT PROGRAMM-    │── 124
    │ ABARBEITUNG FORT       │
    └────────────────────────┘
```